# EUROPEAN PATENT APPLICATION

(11) **EP 2 523 187 A1**
(43) Date of publication of application: **14.11.2012**
(21) Application number: 10842118.1
(22) Date of filing: 06.10.2010
(51) Int. Cl.: G09G 5/10, G09G 5/00, H04N 9/68

(54) **ELECTRONIC DEVICE, METHOD FOR ADJUSTING COLOR SATURATION, PROGRAM THEREFOR, AND RECORDING MEDIUM**

(30) Priority: 08.01.2010 JP 2010003394
(71) Applicant: Sharp Kabushiki Kaisha, Osaka-shi, Osaka 545-8522 (JP)
(72) Inventor: SAITOH, Kohji, Osaka-shi, Osaka 545- 8522 (JP)
(74) Representative: Goddar, Heinz J.
(86) International application number: PCT/JP2010/067581
(87) International publication number: WO 2011/083603

(57) **Abstract**

An electronic device (1) of the present invention includes as optical sensor (5) and a display section (2). The electronic device (1) further includes: an optical characteristic detection section (3) for detecting, on the basis of an output of the optical sensor (5), a characteristic of light incident on a display region which corresponds to the optical sensor (5); and a color saturation adjustment section (4) for adjusting, on the basis of the characteristic thus detected, a color saturation of display information which is to be displayed in the display region.

## Description

### Technical Field

The present invention relates to: an electronic device; a method of adjusting a color saturation; a program; and a recording medium, each of which causes a color video signal to be subjected to color compensation.

### Background Art

In a field of an electronic device such as a display device for displaying a color image, there has been known a technique for causing an original color video signal to be subjected to color compensation so as to provide a more brighter image than an image of the original color video signal. For example, Patent Literature 1 discloses such a method that color compensation is carried out on the basis of not only signal components of three primary colors, namely, R (red color), G (green color), and B (blue color), but also signal components of complementary colors of these, namely, Y (yellow color), M (magenta color), and C (cyan calor).

In a color display device described in Patent Literature 1, a color saturation of a video signal or a luminance of a video signal is compensated so that the color saturation or the luminance thus compensated would not be higher than a predetermined upper limit. That is, there is a case where a color saturation or a luminance of a certain component might become higher than a predetermined upper limit due to color compensation. Particularly, it is impossible to carry out the color compensation ideally in a region where one color is substantially provided. In this case, a video in which a certain component is not subjected to the color compensation properly has an unnatural part when being viewed as a whole video. This is because such a video is provided with pixels (i) a part of which is subjected to color compensation properly and (ii) the other part of which is subjected to color compensation inadequately.

In view of this, the color display device described in Patent Literature 1 first compares gray scale levels of a plurality of color components of an input color video signal with each other. Next, on the basis of a result of the comparison, the color display device (i) determines which one of the plurality of color components has the smallest gray scale level, and (ii) carries out a calculation process with respect to each of the color components other than the color component having the smallest gray scale level. Here, the calculation process is carried out by use of variables determined on the basis of the respective gray scale levels of the color components. The color compensation is thus carried out.

### Citation List

### [Patent Literature]

Patent Literature 1
   Japanese Patent Application Publication, Tokukai, No. 2005-134866 A (Publication Date: May 26, 2005)

### Summary of Invention

### Technical Problem

Meanwhile, in a case where an electronic device is used outdoor, external light might be incident on a display of the electronic device in some cases, depending on a use environment or a use condition. In this case, an image displayed in a region of the display, on which region the external light is incident, has a deterioration in color saturation. This causes the image to be less viewable in some cases.

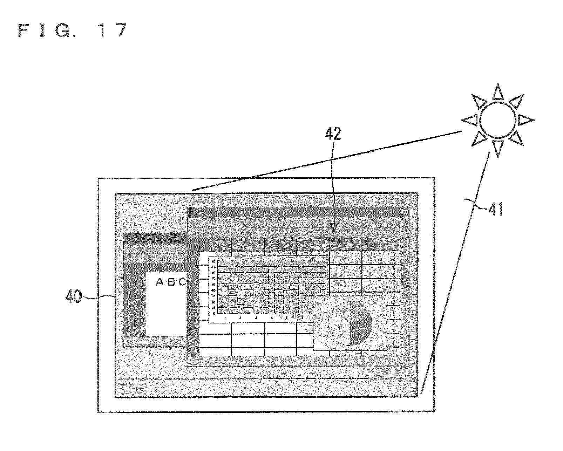

In Fig. 17, external light 41 is incident on a region 42 in a display 40. From the region 42, not only light originally emitted from a light source of the display 40 but also the external light 41 reflected from a surface of the display 40 are incident on eyes of a user. Fig. 17 is a view illustrating a state where external light is incident on a display of an electronic device.

In this case, a characteristic of a color saturation of the display 40 itself is lost. As a result, with respect to the user's eyes, the displayed image becomes an undesirable image in which brightness is insufficient. Accordingly, there has been demand for an electronic device which can display an image while retaining a color saturation of the image, even under a condition where external light is incident on the electronic device.

Note that, according to the technique disclosed in Patent Literature 1, a case where the electronic device is used outdoor has not been taken into consideration. Accordingly, with the technique, if external light is incident on a display section, the electronic device cannot display an image in which a color saturation is adjusted appropriately.

The present invention is made in view of the problems. An object of the present invention is to provide an electronic device which can display, in accordance with an irradiation condition of external light, an image which can be easily viewed by a user.

### Solution to Problem

In order to attain the object, an electronic device of the present invention includes: at least one optical sensor; a display section; characteristic detecting means for detecting, on the basis of an output of the at least one optical sensor, a characteristic of light incident on a display region which corresponds to the at least one optical sensor; and color saturation adjusting means for adjusting, on the basis of the characteristic thus detected, a color saturation of display information which is to be displayed on the display region.

Further, in order to attain the object, a method of adjusting a color saturation of an electronic device including an optical sensor and a display section, includes the steps of: detecting, on the basis of an output of the optical sensor, a characteristic of light incident on a display region which corresponds to the optical sensor; and adjusting, on the basis of the characteristic thus detected, a color saturation of the display region.

According to the arrangement, the electronic device of the present invention includes the optical sensor and the display section, and adjusts the color saturation of the display information on the basis of the out of the optical sensor. It is therefore possible to display, in accordance with an irradiation condition of external light, an image which can be easily viewed by a user.

That is, according to the electronic device of the present invention, first, the optical sensor detects the irradiation condition of the external light in the display region, which corresponds to the optical sensor. Then, the output of the optical sensor is received by the characteristic detecting means. On the basis of the output received from the optical sensor, the characteristic detecting means detects the characteristic of light incident on the display region corresponding to the optical sensor, that is, a region in which the irradiation condition of the external light can be detected by the optical sensor. After that, on the basis of the characteristic of the light thus detected, the color saturation adjusting means adjusts the color saturation of the display information to be displayed in the display region.

Here, the display information is a content to be displayed, supplied from an external device, such as a moving image or a still image, for example. The display information is supplied to the electronic device as information having a predetermined color saturation. Generally, the predetermined color saturation is not a value obtained in consideration of the irradiation condition of the external light. Accordingly, in a case where the electronic device is used, for example, under such a condition that the external light is incident on the electronic device (e.g., outdoor), there might be a case where the display information displayed on a display screen cannot be easily viewed by a user.

In view of this, the electronic device of the present invention adjusts the color saturation of the display information thus received, in accordance with the irradiation condition. Accordingly, it is possible to display an image which can be easily viewed by the user.

### Advantageous Effects of Invention

An electronic device of the present invention includes an optical sensor; a display section; characteristic detecting means for detecting, on the basis of an output of the at least one optical sensor, a characteristic of light incident on a display region which corresponds to the at least one optical sensor; and color saturation adjusting means for adjusting, on the basis of the characteristic thus detected, a color saturation of display information which is to be displayed on the display region. It is therefore possible to display, in accordance with an irradiation condition of external light, an image which can be easily viewed by a user.

### Brief Description of Drawings

Fig. 1

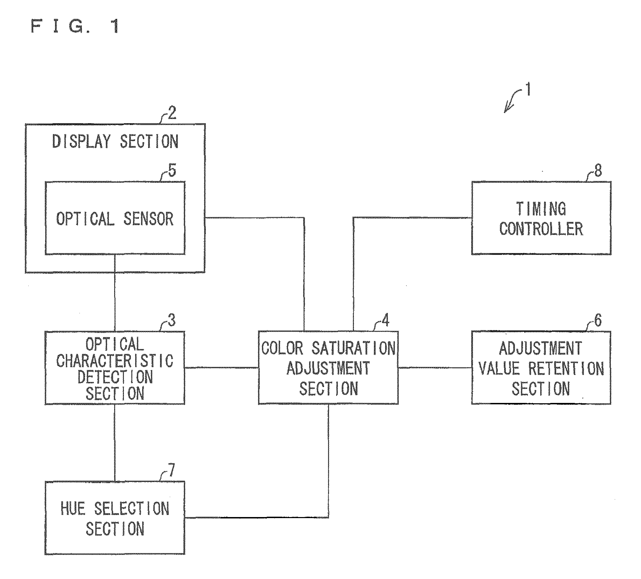

   Fig. 1 is a block diagram illustrating an arrangement of an electronic device in accordance with one embodiment of the present invention.
Fig. 2

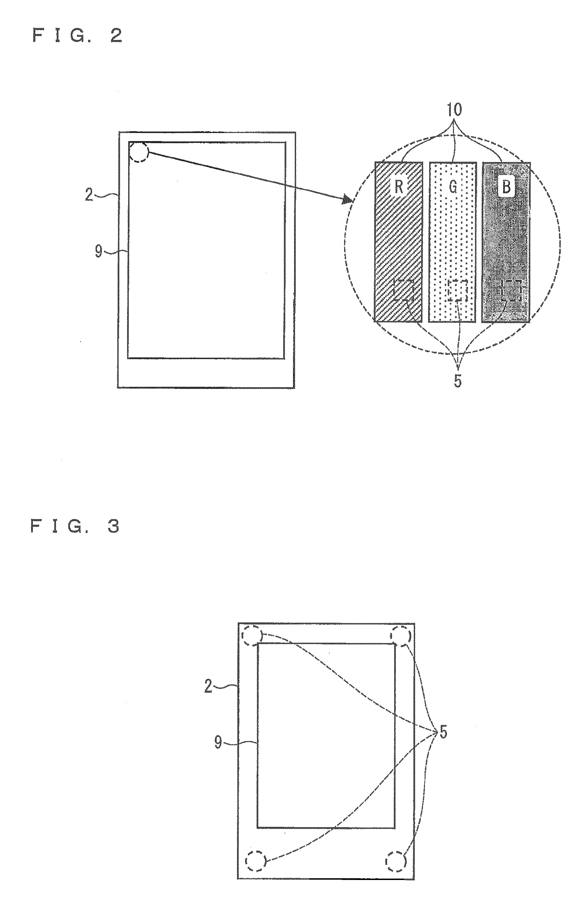

   Fig. 2 is a view illustrating an example of how an optical sensor is provided in the electronic device illustrated in Fig. 1.
Fig. 3
   Fig. 3 is a view illustrating an example of how optical sensors are provided in the electronic device illustrated in Fig. 1.
Fig. 4

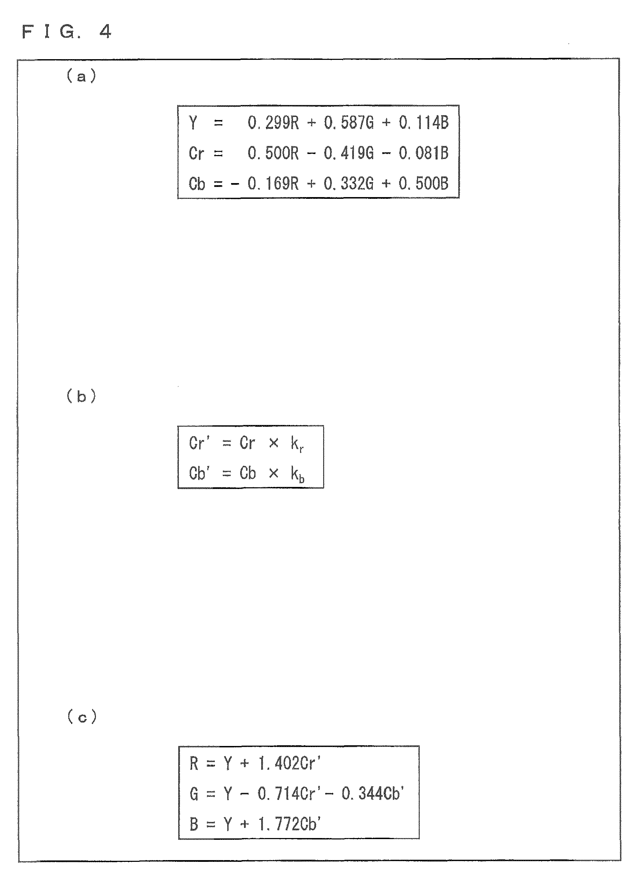

   Fig. 4 is an explanatory view showing how to adjust a color saturation of an electronic device in accordance with one embodiment of the present invention.
Fig. 5

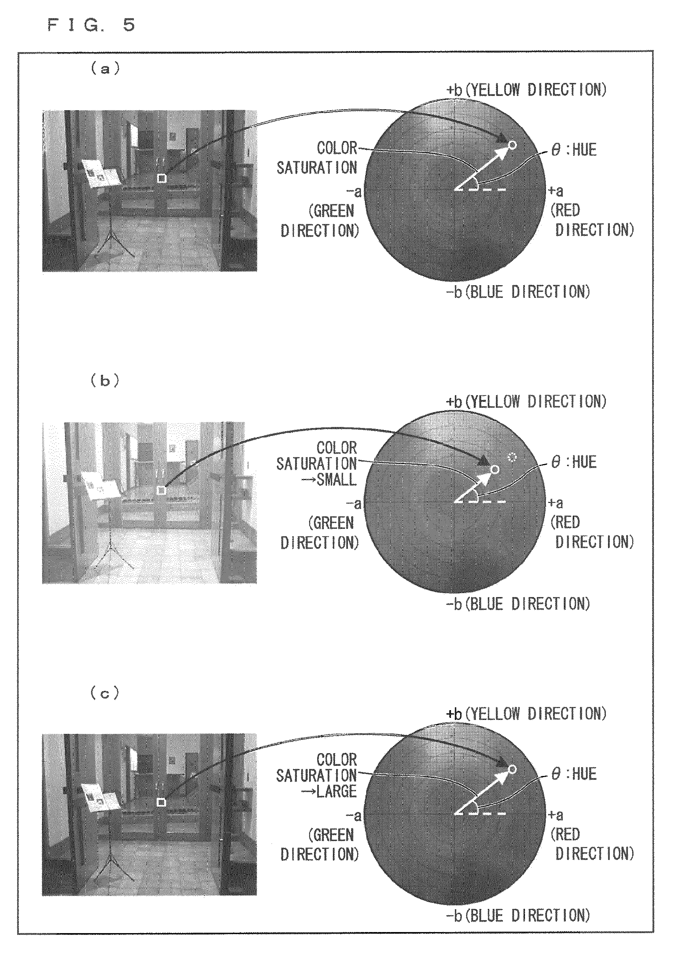

   Fig. 5 is a view showing (i) an example of how an image is displayed on a display screen of an electronic device in accordance with one embodiment of the present invention, and (ii) color saturation information of the display screen of the electronic device.
Fig. 6

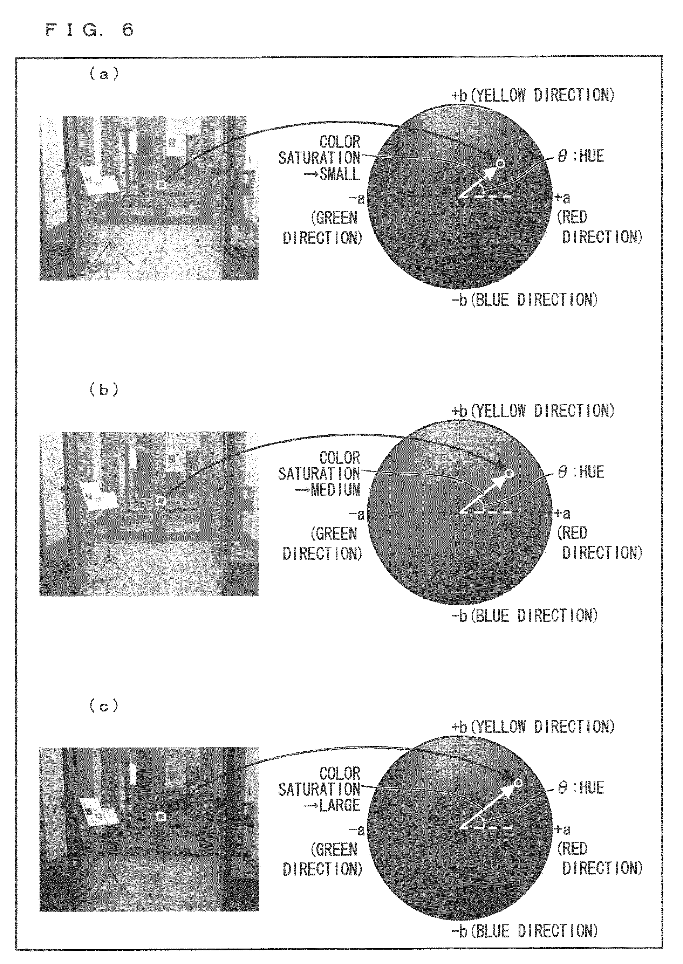

   Fig. 6 is a view showing how to adjust a color saturation in accordance with an irradiation amount of external light in an electronic device in accordance with one embodiment of the present invention.
Fig. 7

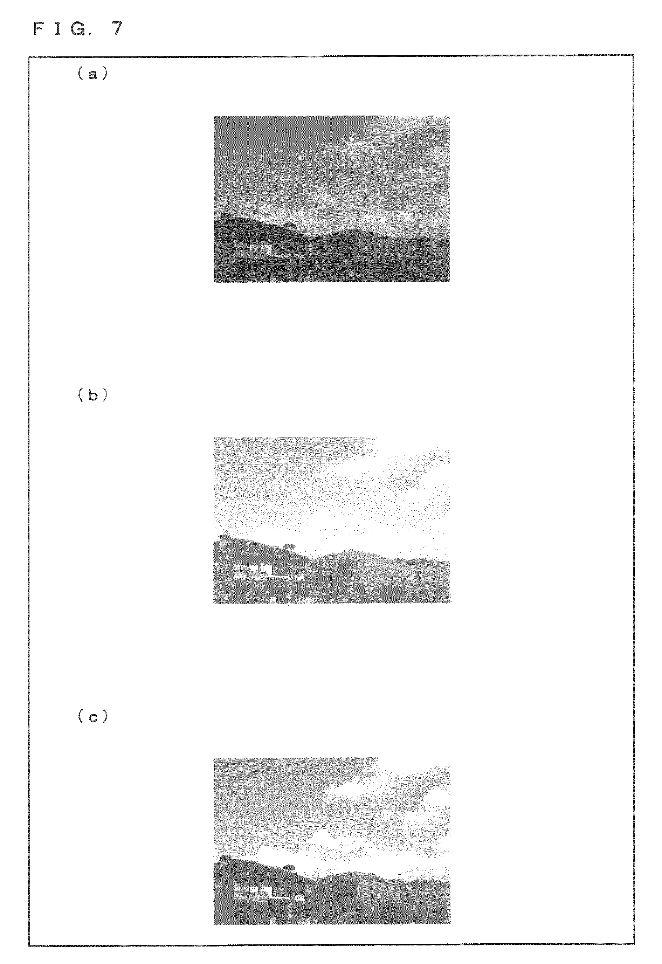

   Fig. 7 is a view showing how to adjust a color saturation in accordance with a spectral characteristic of external light in an electronic device in accordance with one embodiment of the present invention.
Fig. 8

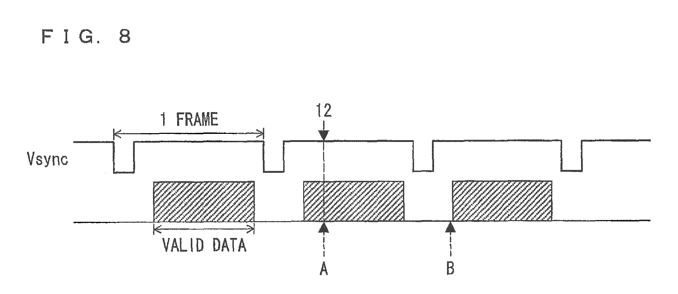

   Fig. 8 is a view showing timing when a color saturation is adjusted in an electronic device in accordance with one embodiment of the present invention.
Fig. 9

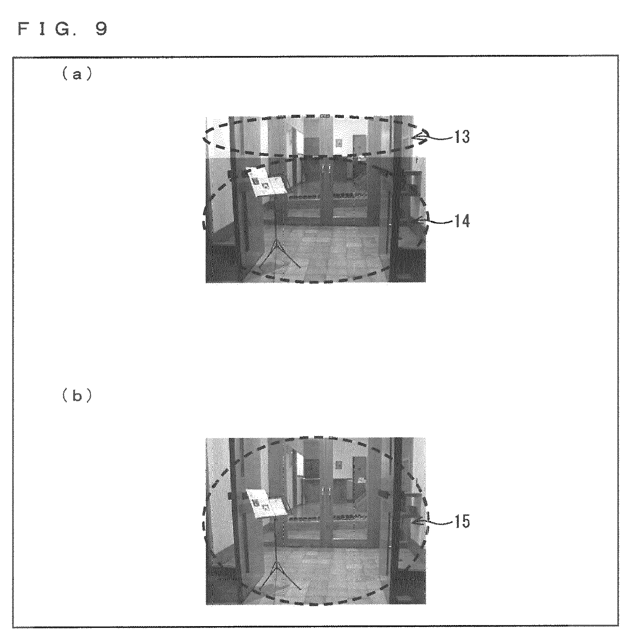

   Fig. 9 is a view showing (i) an example of how an image is displayed on a display screen in a case where a color saturation is adjusted at timing A, and (ii) an example of how an image is displayed on a display screen in a case where the color saturation is adjusted at timing B.
Fig. 10

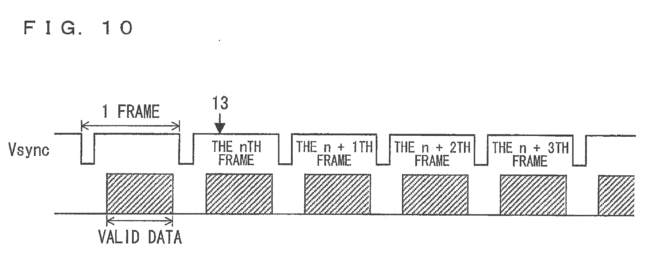

   Fig. 10 is a view showing different timing when a color saturation is adjusted in en electronic device in accordance with one embodiment of the present invention.
Fig. 11

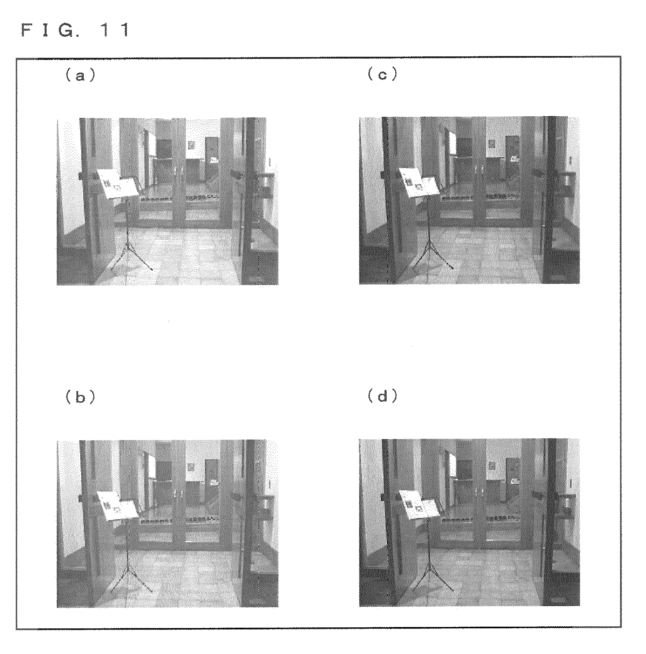

   Fig. 11 is a view showing how a color saturation is adjusted in stages in accordance with the number of frames.
Fig. 12

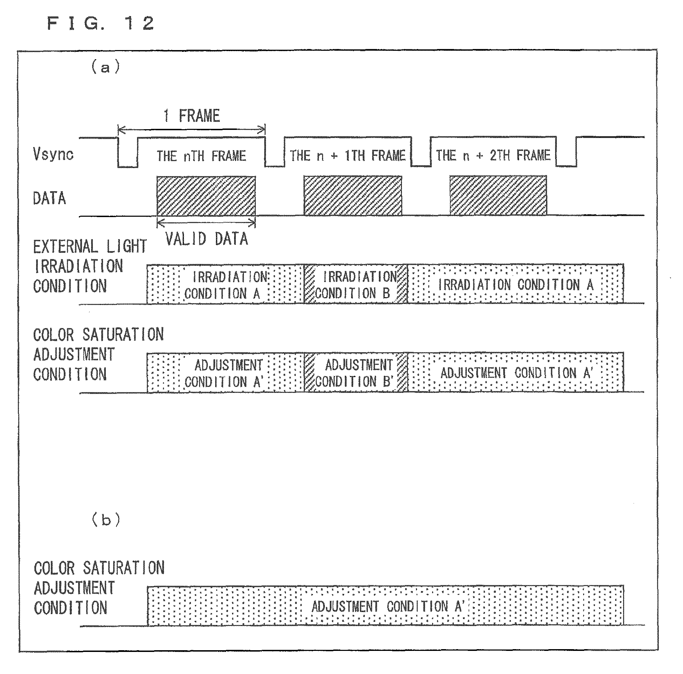

   Fig. 12 is a view showing different timing when a color saturation is adjusted in an electronic device in accordance with one embodiment of the present invention.
Fig. 13

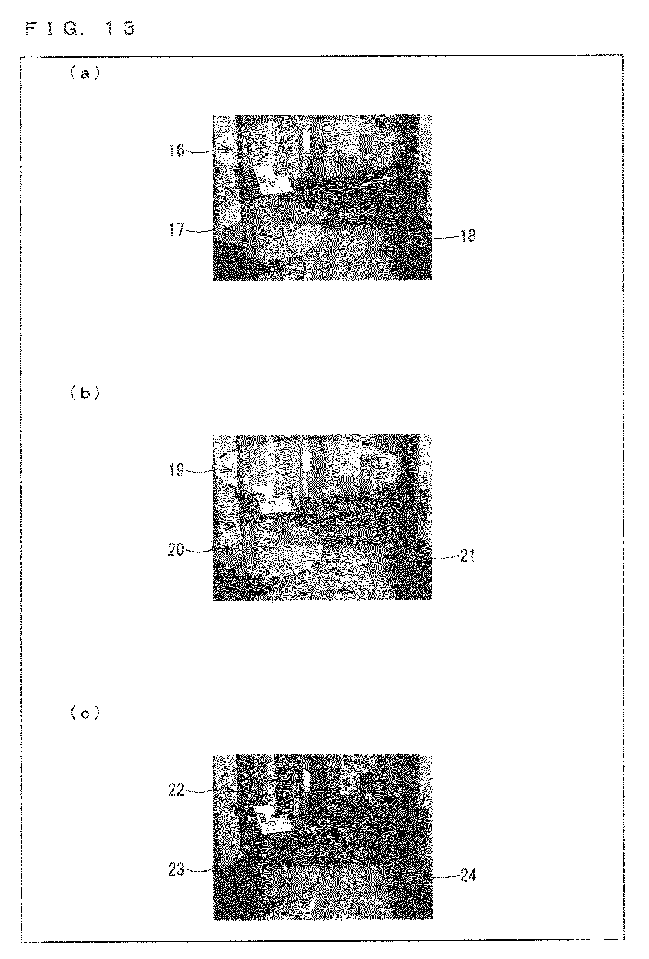

   Fig. 13 is a view showing an example of how to adjust color saturations of a plurality of display regions independently and differently,
Fig. 14

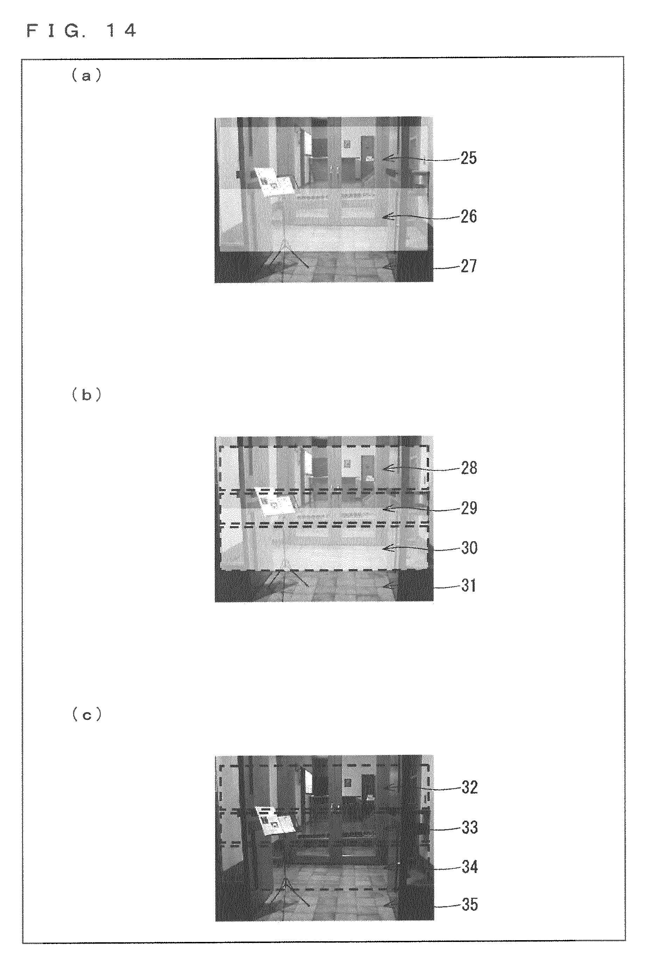

   Fig. 14 is a view showing another example of how to adjust color saturations of a plurality of display regions independently and differently.
Fig. 15

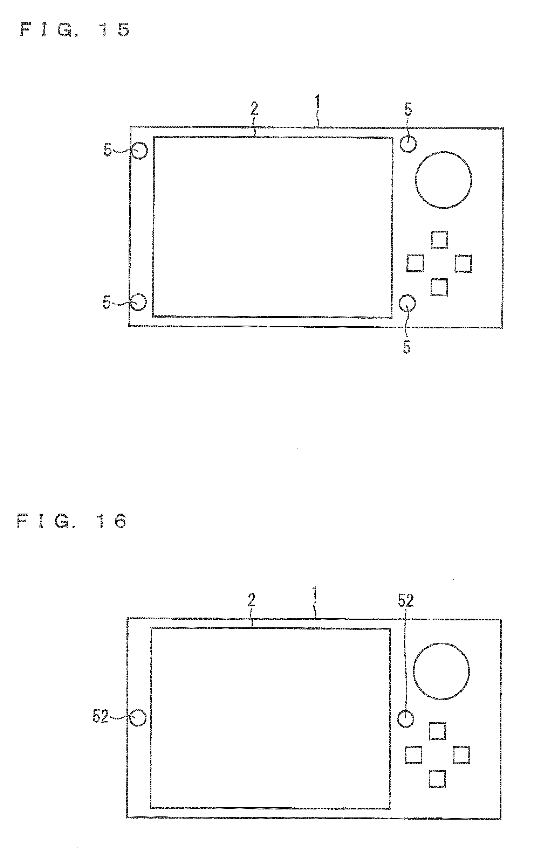

   Fig. 15 is a view illustrating another example of how optical sensors are provided in an electronic device in accordance with one embodiment of the present invention.
Fig. 16
   Fig. 16 is a view illustrating an example of how temperature sensors are provided in an electronic device in accordance with one embodiment of the present invention.
Fig. 17
   Fig. 17 is a view illustrating a state where external light is incident on a screen of an electronic device.

### Description of Embodiments

One embodiment of an electronic device of the present invention is described below with reference to Figs. 1 through 16.

### [Arrangement of electronic device 1]

Fig. 1 is a block diagram illustrating an arrangement of an electronic device 1 in accordance with one embodiment of the present invention. The electronic device 1 includes a display section 2, an optical characteristic detection section (characteristic detecting means) 3, a color saturation adjustment section (color saturation adjusting means) 4, an optical sensor 5, an adjustment value retention section (retaining means) 6, a hue selection section (hue selecting means) 7, and a timing controller 8 (see Fig. 1).

In accordance with an irradiation condition of external light, the electronic device 1 adjusts a color saturation of display information which is to be displayed on the display section 2.

Specifically, the electronic device 1 includes the optical sensor 5 and the display section 2. The optical sensor 5 detects an irradiation condition of light around a position at which the optical sensor 5 is provided, and outputs a result of the detection to the optical characteristic detection section 3. On the basis of the result received from the optical sensor 5, the optical characteristic detection section 3 detects a characteristic of light incident on a display region which corresponds to the optical sensor 5. After that, on the basis of the characteristic of light thus detected, the color saturation adjustment section 4 adjusts a color saturation of the display information which is to be displayed in the display region.

Here, the display region corresponding to the optical sensor 5 is a region in a display region of the display section 2, and is defined such that, within the display region, the optical sensor 5 can detect the irradiation condition of light. That is the display region corresponding to the optical sensor 5 is determined on the basis of the number of optical sensors 5, a position(s) of the optical sensor(s) 5, etc.

Further, the characteristic of light, detected by the optical characteristic detection section 3, includes, for example, at least one of (i) an illuminance of light and (ii) a spectral characteristic of light. Accordingly, the electronic device 1 can display, in accordance with an irradiation condition of external light, an image which can be easily viewed by a user.

The electronic device 1 is not particularly limited. Examples of the electronic device 1 encompass a mobile information terminal, a mobile phone, a digital still camera, a digital video camera, a personal computer, and a television.

In the present specification, the display information is a content to be displayed, such as a moving image and a still image, and is received from an external device (not illustrated), for example. The display information is transmitted to the electronic device 1 as information having a predetermined color saturation. Generally, the predetermined color saturation is not a value set in consideration of an irradiation condition of external light.

In this case, if the electronic device 1 is used, for example, under such a condition that external light is incident on the electronic device 1 (e.g., outdoor), the display information displayed on the display screen can not be easily viewed by a user. In view of this, the electronic device 1 adjusts the color saturation of the display information thus received in accordance with the irradiation condition of external light, so as to display an image which can be easily viewed by a user.

The display section 2 includes the optical sensor 5. and displays the display information in the display region. Specifically, the display section 2 displays the display information whose color saturation is adjusted in accordance with the output of the optical sensor 5. Here, the display region of the display section 2 may be a single whole display screen of the display section 2. However, it is preferable that the display region is a part of the display screen. With the arrangement in which the display region is a part of the display screen, it is possible to carry out finer control of the color saturation of the display information with respect to each of parts of the display region, as compared with a case where the color saturation of the display information is adjusted for a single entire display screen. It is therefore possible to further improve display quality. The display section 2 may be a liquid crystal panel or an organic EL panel, for example.

The optical sensor 5 detects an irradiation condition of external light, and outputs a result of the detection to the optical characteristic detection section 3. The optical sensor 5 may be an illuminance sensor, for example. According to the present embodiment, the optical sensor 5 is included in the display section 2. Note, however, that the present invention is not limited to this. The optical sensor 5 may be provided (i) outside the display section 2 and (ii) in a housing frame region. Further, the display region within which an irradiation condition of external light can be detected by the optical sensor 5 can be determined appropriately in accordance with the number of optical sensors 5, or a position(s) of the optical sensor(s) 5.

The number of optical sensors 5 and the position(s) of the optical sensor(s) 5 are not particularly limited. However, it is preferable to provide a plurality of optical sensors 5, and arrange the plurality of optical sensors 5 in positions different from each other. With the arrangement, it becomes possible to detect details of the irradiation condition (e.g., light distribution) in the display region. In this case, the plurality of optical sensors 5 can be arranged either in pixels of the display section 2 or in a frame region of the display section 2 outside the display screen of the display section 2.

On the basis of the output received from the optical sensor 5, the optical characteristic detection section 3 detects an optical characteristic. Here, the optical characteristic includes an finance of light or a spectral characteristic of light, for example. Further, in a case where the display screen includes a plurality of display regions, for example, it is preferable that the optical characteristic detection section 3 detects an optical characteristic per display region on the basis of an output of a corresponding optical sensor 5. This makes it possible to carry out fine control of the color saturation with respect to each of the plurality of display regions of the display screen. It is therefore possible to further improve the display quality.

On the basis of the optical characteristic detected by the optical characteristic detection section 3, the color saturation adjustment section 4 adjusts the color saturation of the display information to be displayed on the display region. Here, the adjustment, which is carried out on the basis of the optical characteristic, means that, the color saturation of the display information is adjusted in accordance with an irradiation intensity of light, an irradiation time of light, or a spectral characteristic of light, for example. Note that details of the adjustment of the color saturation, carried out by the color saturation adjustment section 4, will be described later.

The adjustment value retention section 6 retains a plurality of adjustment values, which are different from each other and each of which is used by the color saturation adjustment section 4 to adjust a color saturation. Each of the plurality of adjustment values is a valve set in advance to adjust a color saturation.

On the basis of the spectral characteristic thus detected, the hue selection section 7 selects at least one hue as a target whose color saturation is to be adjusted, among a plurality of hues different from each other. For example, in a case where it is determined, on the basis of the spectral characteristic detected by the optical characteristic detection section 3, that an amount of a red hue is larger than a predetermined reference amount, the hue selection section 7 selects the red hue among the plurality of hues different from each other. In accordance with the selection made by the hue selection section 7, the color saturation adjustment section 4 adjusts a color saturation of the red hue. This makes it possible to improve the display quality.

The predetermined reference amount is not particularly limited, and can be determined for each of electronic devices 1, appropriately. The hue selection section 7 selects, as a target hue whose color saturation is to be adjusted, a hue which is larger in amount than a predetermined reference amount. Note, however, that the present embodiment is not limited to this, and it is possible that the hue selection section 7 selects a hue other than the hue which is larger in amount than a predetermined amount. The hue selected by the hue selection section 7 may include at least one hue selected from the group consisting of a red hue, a blue hue, a green hue, a yellow hue, a light blue hue, and a purple hue, for example.

The timing controller 8 controls timing at which the color saturation adjustment section 4 adjusts the color saturation. For example, in a case where the color saturation adjustment section 4 adjusts a color saturation for each frame, the timing controller 8 controls such timing that the color saturation is adjusted for each frame.

Further, in addition to the arrangement described above, the electronic device 1 can include setting switching means (not illustrated) for carrying out switching between (i) a setting which disallows the color saturation adjustment section 4 to adjust a color saturation irrespective of any characteristic, (ii) a setting which allows the color saturation adjustment section 4 to adjust a color saturation irrespective of any characteristic, (iii) and a setting which allows the color saturation adjustment section 4 to adjust a color saturation depending on a characteristic

### (Example of arrangement of optical sensor 5)

Each of Figs. 2 and 3 illustrates an example of how to arrange an optical sensor(s) 5 in the electronic device 1. As described above, it is preferable to arrange a plurality of optical sensors 5 in positions different from each other in the electronic device 1. Fig. 2 illustrates an arrangement in which an optical sensor 5 is arranged in a pixel 10 of a display screen 9 of the display section 2. By arranging the optical sensor 5 in the pixel 10, it becomes possible to detect easily (i) which part of the display region is irradiated with external light, and (ii) what characteristic the external light incident on the part has.

Here, it is possible that (i) the optical sensor 5 is provide in each of a plurality of pixels 10 of the display screen 9 or (ii) the optical sensor(s) 5 is provided only in a certain region(s). Further, it is unnecessary to provide the plurality of optical sensors 5 with respect to an R pixel 10, a G pixel 10, and a B pixel 10, equally. The number of optical sensors 5 and density of the optical sensors 5 may differ between the R pixel 10, the G pixel 10, and the B pixel 10.

Meanwhile, it is also possible to arrange a plurality of optical sensors 5 in a frame region of the display section 2 outside the display screen 9 of the display section 2 (see Fig. 3). With the arrangement in which the plurality of optical sensors 5 are provided in positions different from each other in the frame region of the display section 2, it becomes possible to detect an irradiation condition of external light in a specific region in the display screen 9. In this case, the positions of the plurality of optical sensors 5 are not particularly limited, as long as the plurality of optical sensors 5 are provided in not less than one position. For example, it is possible to arrange four optical sensors 5 at four corners of the frame region, respectively (see Fig. 3), or arrange four optical sensors 5 on four sides of the frame region, respectively.

### [Operation in electronic device 1]

Next, the following description deals with one example of an operation in the electronic device 1.

### (Method of adjusting color saturation)

Fig. 4 is an explanatory view for explaining a method of adjusting a color saturation in the electronic device 1. The electronic device 1 adjusts the color saturation of the display information in the following manner. The following description deals with a method employing a YCrCb color space, as an example of a method of adjusting a color saturation. Note, however, that the method of the present invention, for adjusting a color saturation, is not limited to this.

According to the method of the present embodiment, for adjusting a color saturation, first, in a case where the electronic device 1 receives display information from an external device (not illustrated), for example, the electronic device 1 causes color information included in the display information to be divided into luminance signal (luminance) "Y" and a color-difference signals "Cr, Cb". That is, an RGB color space is converted into a YCrCb color space by use of RGB gray scale values of the display information thus received. (a) of Fig. 4 shows a conversion equation used in conversion of the RGB color space into the YCrCb color space. Here, "Y" is a luminance, "Cr" is a color-difference signal between a red component and a green component, and "Cb" is a color-difference signal between a blue component and a yellow component.

Next, in order to carry out adjustment of a color saturation with respect to a Cr value and a Cb value obtained through the conversion, the Cr value is multiplied by "Kr", and the Cb value is multiplied by "Kb" (see (b) of Fig. 4). For example, in a case where it is desired that the red component is strengthened, that is, the green component is weakened, the Cr component is multiplied by a Kr which is more than 1. On the other hand, in a case where it is desired that the red component is weakened, that is, the green component is strengthened, the Cr component is multiplied by a Kr which is in a range of 0 to 1. Further, in a case where it is desired that the blue component is strengthened, that is, the yellow component is weakened, the Cb component is multiplied by a Kb which is more than 1. On the other hand, in a case where it is desired that the blue component is weakened, that is, the yellow component is strengthened, the Cb component is multiplied by a Kb which is in a range of 0 to 1. "Cr' " is a result of the calculation carried out with respect to the Cr component, and "Cb' " is a result of the calculation carried out with respect to the Cb component.

Finally, values of "Y", "Cr' ", and "Cb' " are converted again into the RGB values (see (c) of Fig. 4). This process is carried out with respect to each pixel in accordance with a received image signal so that display information whose color saturation is adjusted is obtained.

The color space applied in the adjustment of the color saturation is not limited to the YCrCb color space, and examples of such a color space include various color spaces (such as a YUV color space, a YIQ color space, a Lab color space, an HLS color space, an HSV color space, an HSB color space, and an HSI color space).

Further, there is a case where the electronic device 1, such as a digital still camera (DSC) and a digital video camera (DVC), includes input means into which an image signal is inputted in such a manner that not RGB gray scale values but a luminance signal (such as a YUB) and color-difference signals are inputted separately. In this case, the step shown in (a) of Fig. 4, i.e., the step of converting the RGB color space into the YCrCb color space, can be omitted.

Fig. 5 shows how a color saturation of an image displayed on a display screen is adjusted as described above. Fig. 5 is a view showing (i) an example of how an image is displayed on a display screen of the electronic device 1 and (ii) color saturation information of the display screen.
(a) of Fig. 5 shows a display screen on which an irradiation intensity of external light is not high relatively. In this state, visibility is sufficient, and adjustment of the color saturation is unnecessary. Here, color saturation information of the display screen is shown on a right side with respect to the display screen shown in Fig. 5. The color saturation information indicates a color saturation of a square region in the display screen. A length (an absolute value) of an arrow indicates a color saturation, and an angle θ indicates a hue. As described above, for a pixel of the electronic device 1, there is the color saturation information of an image displayed on the pixel (referred to as "color information" in some cases).

Here, in a case where external light is incident on the display screen (see (b) of Fig. 5), the entire display screen becomes whitish in color. In this state, the color saturation is adjusted, that is, the color saturation is emphasized. It is therefore possible to display an image whose display quality is secured (see (c) of Fig. 5).

### (Adjustment of color saturation in accordance with irradiation amount of external light)

Fig. 6 is a view showing how a color saturation is adjusted in accordance with an irradiation amount of external light in the electronic device 1. As shown in Fig. 6, it is preferable that (i) the adjustment value retention section 6 of the electronic device 1 retains a plurality of adjustment values different from each other, each of which is used to adjust a color saturation, and (ii) the color saturation adjustment section 4 of the electronic device 1 adjusts a color saturation in accordance with one of the plurality of adjustment values, which one of the plurality of adjustment values corresponds to the characteristic thus detected.

For example, in a case where an irradiation intensity of external light is high, a color saturation of an image might be deteriorated significantly and a faded image having low visual quality might be displayed (as shown in (a) of Fig. 6). In this case, it might be impossible to cause the image thus displayed to have a desired color saturation by merely emphasizing the color saturation of the image (see (b) of Fig. 6).

In view of this, the color saturation adjustment section 4 selects, in accordance with the characteristic detected by the optical characteristic detection section 3 (i.e., in accordance with an irradiation amount of external light), one of the plurality of adjustment values retained by the adjustment value retention section 6. Then, the color saturation adjustment section 4 adjusts the display information by use of the one of the plurality of adjustment values thus selected so that the color saturation of the image is further emphasized. With this arrangement, it is possible to cause the image to have a desired color saturation, as shown in (c) of Fig. 6.

Further, it is preferable that the color saturation adjustment section 4 adjusts a value indicating a degree of emphasis of the color saturation (i) to be higher as the illuminance thus detected becomes higher, and (ii) to be lower as the illuminance thus detected becomes lower. That is in a case where the irradiation amount of external light is large, the color saturation adjustment section 4 adjusts the value indicating a degree of emphasis of the color saturation to be high. On the other hand, in a case where the irradiation amount of external light is small, the color saturation adjustment section 4 adjusts the value indicating a degree of emphasis of the color saturation to be close to 1. With the arrangement, it becomes possible to cause the image thus displayed to have higher visual quality.

As described above, by (i) retaining a plurality of adjustment values indicating, respectively, a plurality of stages of how much the color saturation is to be emphasized, and (ii) adjusting the color saturation by use of one of the plurality of adjustment values, corresponding to the optical characteristic detected by the optical sensor 5, it is possible to carry out optimum image adjustment in accordance with a situation in which the electronic device 1 is used.

### (Adjustment of color saturation in accordance with spectral characteristic)

Fig. 7 is a view showing how to adjust a color saturation in accordance with a spectral characteristic of external light. It is preferable that the electronic device 1 selects a hue whose color saturation is to be adjusted, in accordance with a spectral characteristic of external light t incident on the electronic device 1, as shown in Fig. 7.

For example, (a) of Fig. 7 shows an irradiation state of external light during the daytime. Meanwhile, (b) of Fig. 7 shows an irradiation state of external light in which a red component is large in amount (such as a sunrise glow or a sunset glow). In a case where such light is incident on the image thus displayed, the image has a reduction in color saturation and becomes reddish. In this case, the color saturation adjustment section 4 adjusts the entire display screen to have a reduction in a color saturation of the red component or adjusts the entire display screen to have an increase in color saturations of color components other than the red component. With the arrangement, it becomes possible to (i) control a balance between colors in the display region appropriately and entirely, and, as a result, (ii) display a preferable image (see (c) of Fig. 7).

Here, the hue selection section 7 selects, among a plurality of hues, at least one hue which is not a hue larger in amount than a predetermined reference amount, and the color saturation adjustment section 4 adjusts the at least one hue thus selected. In this case, it is preferable that the color saturation adjustment section 4 adjusts a value of the color saturation of the at least one hue thus selected to be higher.

Further, the hue selection section 7 can select, among the plurality of hues, at least one hue which is a hue larger in amount than a predetermined reference amount, and the color saturation adjustment section 4 can adjust the at least one hue thus selected. In this case, it is preferable that the color saturation adjustment section 4 adjusts a value of the color saturation of the at least one hue thus selected to be lower.

With the arrangement, it is possible to adjust, in accordance with a spectral characteristic of external light, the display information to have a desired color saturation. It is therefore possible to improve display quality.

According to the electronic device of the present invention, the hue which is larger in amount than a predetermined reference amount is not limited to a red hue, and may be at least one of a blue hue, a green hue, a yellow hue, a light blue hue, and a purple hue, for example.

### (Timing when color saturation is adjusted)

Fig. 8 is a view showing timing when a color saturation is adjusted in the electronic device 1. Fig. 9 is a view showing an example of an image displayed on a display screen in a case where a color saturation is adjusted at timing A shown in Fig. 8, and an example of an image displayed on the display screen in a case where a color saturation is adjusted at timing B shown in Fig. 8. The following description deals with a case where the characteristic detected by the optical characteristic detection section 3 is an illuminance, as an example.

As shown in Figs. 8 and 9, it is preferable that the color saturation adjustment section 4 of the electronic device 1 adjusts, in accordance with the characteristic detected within a certain frame, a color saturation within a next frame following the certain frame. That is, it is preferable to adjust, for each frame, a color saturation.

For example, in a case where (i) the optical characteristic detection section 3 detects, on the basis of the output received from the optical sensor 5, an illuminance in the middle of 1 frame (indicated by an arrow 12 in Fig. 8), and (ii) the color saturation adjustment section 4 adjusts a color saturation in accordance with a result of the detection, the image being displayed becomes as shown in (a) of Fig. 9.

That is, if a color saturation is adjusted at timing A shown in Fig. 8, the image thus displayed might be such that a region 13 in which adjustment of the color saturation has not been reflected and a region 14 in which the adjustment of the color saturation has been reflected are displayed in a separate manner (see (a) of Fig. 9). In other words, in a case where the color saturation is adjusted at timing in the middle of 1 frame, the image thus displayed might be such that an upper part of the image and a lower part of the image are different from each other in color saturation. This generates flickers in the display screen.

In view of this, the color saturation adjustment section 4 adjusts the color saturation at timing B shown in Fig. 8, that is, timing in the next frame following the frame within which the optical characteristic detection section 3 has detected the optical characteristic. With the arrangement, it is possible to display an image so that all of the display regions 15 in the display screen are adjusted in color saturation uniformly, as shown in (b) of Fig. 9.

It is preferable that the optical characteristic detection section 3 outputs the characteristic thus detected to the color saturation adjustment section 4 only once in 1 frame. This prevents generation of flickers in the display screen.

### (Adjustment of color saturation in stages in accordance with the number of frames)

Fig. 10 is a view showing different timing when a color saturation is adjusted in the electronic device 1. Fig. 11 is a view showing how to adjust a color saturation in stages in accordance with the number of frames.

As shown in Figs. 10 and 11, it is preferable that the electronic device 1 adjusts a color saturation in stages through a plurality of frames which are provided continuously.

For example, in a case where (i) the optical characteristic detection section 3 detects, in the middle of the name frame (indicated by an arrow 13 in Fig. 10), a change in the optical characteristic supplied from the optical sensor 5 (see Fig. 10), and (ii) a color saturation is adjusted to a final target color saturation at once directly in the n + 1th frame following the nth frame, visual quality of the image might be changed significantly and instantly when the nth frame switches to the n + 1th frame. As a result, such a change is perceived by human eyes as flickers generated in the display screen.

In view of this, after the optical characteristic detection section 3 detects information on a change in the optical characteristic supplied from the optical sensor 5, a value of a color saturation is adjusted in stages during a plurality of frames.

(a) of Fig. 11 shows an image in a case where the optical characteristic detection section 3 detects an optical characteristic outputted from the optical sensor 5 (i.e., the image in the nth frame), for example. When the nth frame is switched to the next frame (the n + 1th frame) a color saturation of the nth frame is adjusted to be closer to a final target color saturation from the color saturation of the nth frame (see (b) of Fig. 11). Further, when the n + 1th frame is switched to the next frame (the n + 2th frame), the color saturation of the n + 1th frame is adjusted to be further closer to the final target color saturation (see (c) of Fig. 11). Then, when the n + 2th frame is switched to the n + 3th frame, the color saturation of the n + 2th frame is adjusted to be the final target color saturation (see (d) of Fig. 11). This makes it possible to display an image while suppressing generation of flickers.

It is more preferable that the number of continuous frames during which a value of a color saturation is adjusted to be higher in stages and the number of continuous frames during which a value of a color saturation is adjusted to be lower in stages are different from each other.

With the arrangement, it is possible that a speed at which a color saturation is emphasized and a speed at which a color saturation is weakened are different from each other. This prevents humans eyes from perceiving flickers.

Further, in a case where a liquid crystal panel is used as the display section 2, it is more preferable that a color saturation is adjusted in stages during continuous frames the number of which is set for each of different temperatures on a surface of the display section 2.

That is, there has been known that a response characteristic of liquid crystal is changed depending on a change in temperature. For example, the response characteristic of liquid crystal becomes quicker as the surface of the liquid crystal panel has a higher temperature, and becomes slower as the surface of the liquid crystal panel has a lower temperature. Accordingly, in a case where the electronic device 1 includes a temperature sensor (not illustrated) and temperature detection means for detecting, on the basis of an output received from the temperature sensor, a temperature of a surface of the display section 2, it is possible to (i) change, in accordance with an ambient temperature, a transition time period for adjusting a color saturation, and, as a result, (ii) cause even a liquid crystal panel to display an image having a desirable color saturation.

In this case, the transition time period is set to be longer in a case where the surface of the display section 2 has a high temperature, whereas it is set to be shorter in a case where the surface of the display section 2 has a low temperature, for example. That is, it is more preferable that, in the case of a high temperature, the number of frames during which a color saturation is adjusted in stages is increased, whereas, in the case of a low temperature, the number of frames during which a color saturation is adjusted in stages is reduced, for example. With the arrangement, it is possible to adjust a color saturation in accordance with a response characteristic of a liquid crystal panel.

### (Adjustment of color saturation in accordance with an irradiation condition of light)

Fig. 12 is a view showing different timing when a color saturation is adjusted in the electronic device 1. As shown in Fig. 12 it is preferable that, in a case where an output of the optical sensor 5 of the electronic device 1 is changed and then is further changed, within a predetermined reference time period, back to the state before the output was changed, the color saturation adjustment section 4 of the electronic device 1 does not adjust a color saturation.

For example, as shown in (a) of Fig. 12, in a case where (i), as to a plurality of continuous frames, an irradiation condition of external light is "irradiation condition A" in the nth frame, and then, is changed to "irradiation condition B" in the n + 1th frame, and after that, is changed back to "irradiation condition A" in the n + 2th frame, and (ii) a color saturation is adjusted in accordance with such changes in irradiation condition, flickers are generated in the display screen.

In view of this, as shown in (b) of Fig. 12, in a case where the irradiation condition in the nth frame is changed, and then is further changed, within a predetermined reference time period, back to the irradiation condition before it was changed (i.e., the irradiation condition in the nth frame), the color saturation adjustment section 4 does not adjust a color saturation, and keeps a constant adjustment condition during such time periods of the frames. With the arrangement, it is possible to (i) suppress generation of flickers, and, as a result, (ii) display an image so that a color saturation is naturally changed.

The reference time period is not particularly limited. However, in a case where the reference time period is 1 frame, it becomes possible to display an image further preferably.

### (Adjustment of color saturation per display region)

Fig. 13 is a view showing how to adjust a color saturation for each of a plurality of display regions different from each other. As shown in Fig. 13, it is preferable that a display region of the electronic device 1, which is a target whose color saturation is to be adjusted, is a part of the display screen of the display section 2. That is, it is preferable that the display screen includes a plurality of display regions. In this case, it is more preferable that (i) the optical characteristic detection section 3 detects, in accordance with an output received from an optical sensor 5 corresponding each of the plurality of display regions, a characteristic in the display region, and (ii) the color saturation adjustment section 4 adjusts, for each of the plurality of display regions, a color saturation in accordance with the characteristic in the display region.

For example, as shown in (a) of Fig. 13, in a case where (i) first external light is incident on a partial region 16 of the display screen, and (ii) second external light whose intensity is different from that of the first external light is incident on a partial region 17 of the display screen, a color saturation in the partial region 16 is adjusted by use of a value in accordance with the intensity of the first external light, and a color saturation in the partial region 17 is adjusted, in accordance with the intensity of the second external light, by use of a value different from the value used to adjust the color saturation in the partial region 16. That is, regions 19 and 20 shown in (b) of Fig. 13 are adjusted in color saturation with the use of different values, while a region 21 on which no external light is incident is not adjusted in color saturation. As a result, an image is displayed as shown in (c) of Fig. 13.

As described above, a color saturation is not adjusted such that an entire display screen is adjusted in color saturation uniformly in the same manner but such that an optimum amount of adjustment of a color saturation is set for each of irradiated regions. With the arrangement, it is possible to prevent display quality from being deteriorated more successfully

Further, in a case where a value of a characteristic in one of the plurality of display regions is different from that of a characteristic of adjacent one of the plurality of display regions, it is more preferable that the color saturation adjustment section 4 adjusts a color saturation in a region in the vicinity of a border between the one of the plurality of display regions and the adjacent one of the plurality of display regions by use of an intermediate value between (i) an adjustment value for a color saturation, which corresponds to a characteristic in the one of the plurality of display regions, and (ii) another adjustment value corresponding to an illuminance in the adjacent one of the plurality of display regions.

Fig. 14 is a view showing another example of how to adjust color saturations for a plurality of display regions, respectively and differently.

That is, as shown in (a) of Fig. 14, in a case where (i) first external light is incident on a region 25, and second external light having an intensity different from that of the first external light is incident on a region 27, and (ii) the region 25 and the region 27 are not adjacent to each other, a color saturation in the region 25 is adjusted by use of a value suitable for the region 25, and a color saturation in the region 27 is adjusted by use of another value suitable for the region 27.

On the other hand, as shown in (b) of Fig. 14, in a case where (i) first external light is incident on a region 28 and second external light having an intensity different from that of the first external light is incident on a region 30, (ii) the region 28 and the region 30 are adjacent to each other, and (iii) color saturations in the region 28 and the region 30 are adjusted separately by use of respective adjustment values, a large difference in color saturation is made in a region in the vicinity of a border between the region 28 and the region 30. This may cause generation of flickers. For this reason, a color saturation of a region 29 in the vicinity of the border between the region 28 and the region 30 is adjusted by use of an intermediate value between the adjustment value used to adjust the color saturation in the region 28 and another adjustment value used to adjust the color saturation in the region 30. With the arrangement, it is possible to reduce the large difference in color saturation in the region in the vicinity of the border between the region 28 and the region 30. It is therefore possible to adjust a color saturation in each of the plurality of display regions without reducing visual quality of an entire display screen, as shown in (c) of Fig. 14.

In the aforementioned embodiment, the optical sensor 5 is included in the display section 2, as an example. However, the present invention is not limited to this, and the optical sensor 5 can be provided in a housing frame region outside the display section 2, for example. Fig. 15 is a view illustrating another example of how the optical sensor 5 is provided in the electronic device 1.

Further, as illustrated in Fig. 16, in a case where the electronic device 1 includes a temperature sensor 52, the temperature sensor 52 may be provided in the housing frame region outside the display section 2, in the same manner as the optical sensor 5. Fig. 16 is a view illustrating an example of how the temperature sensor 52 is provided in the electronic device 1.

### (Program and recording medium)

Lastly, each block included in the electronic device 1 can be constituted by a hardware logic. Alternatively, each block included in the electronic device 1 can be realized by software by use of a CPU (Central Processing Unit) as described below.

That is, the electronic device 1 includes: the CPU which executes an instruction of a control program realizing each of the functions described above; a ROM (Read Only Memory) in which the control program is stored; a RAM (Random Access Memory) which develops the control program into an executable format; and a storage device (storage medium), such as a memory, in which the control program and various kinds of data are stored.

With the arrangement, the object of the present invention can be also achieved by use of a predetermined recording medium. In the recording medium, a program code (an execute form program, an intermediate code program, or a source program) of the control program of the electronic device 1, which program code is software for realizing each of the above functions, is computer-readably stored. The recording medium is supplied to the electronic device 1. The electronic device 1 (or the CPU or an MPU) serving as a computer reads out the program code recorded in the recording medium, and executes the program code.

The recording medium for supplying the program code to the electronic device 1 is not limited to a specific structure or a specific sort. That is, examples of the storage medium encompass: tapes, such as a magnetic tape and a cassette tape; disks including a magnetic disk, such as a floppy disk (registered trademark) and a hard disk, and an optical disk, such as a CD-ROM, an MO, an MD, a DVD, and a CD-R; cards, such as an IC card (including a memory card) and an optical card; and semiconductor memories, such as a mask ROM, an EPROM, an EEPROM, and a flash ROM.

Further, the object of the present invention can be also achieved with an arrangement in which the electronic device 1 is constituted to be connectable to a communication network. In this case, the program code is supplied to the electronic device 1 via the communication network. The communication network is not limited to a specific sort or a specific type, as long as the program code can be supplied to the electronic device 1 via the communication network. Examples of the communication network encompass the Internet, an intranet, an extranet, a LAN, an ISDN, a VAN, a CATV communication network, a virtual private network, a telephone line network, a mobile communication network, and a satellite communication network.

Furthermore, a transmission medium constituting the communication network is not limited to a specific structure or a specific sort, as long as the transmission medium can transmits the program code. Specifically, it is possible to use a wired line such as a line in compliance with an IEEE 1394 standard, a USB (Universal Serial Bus) line, a power line, a cable TV line, a telephone line, an ADSL (Asymmetric Digital Subscriber Line) line, and the like, as the transmission medium. Moreover, it is possible to use (i) a wireless line utilizing an infrared ray used in IrDA and a remote controller, (ii) a wireless line which is in compliance with a Bluetooth standard (registered trademark) or an IEEE802.11 wireless standard, and (iii) a wireless line utilizing an HDR, a mobile phone network, a satellite line, a terrestrial digital network, and the like, as the transmission medium. Note that, the present invention can be realized by a computer data signal which is realized by electronic transmission of the program code and which is embedded in a carrier wave.

The present invention is not limited to the description of the embodiments above, but may be altered by a skilled person within the scope of the claims. An embodiment based on a proper combination of technical means disclosed in different embodiments is encompassed in the technical scope of the present invention.

Further, the electronic device of the present invention preferably further includes: retaining means for retaining a plurality of adjustment values which are different from each other, the color saturation being adjusted by use of one of the plurality of adjustment values, the color saturation adjusting means adjusting the color saturation by use of the one of the plurality of adjustment values, which one of the plurality of adjustment values corresponds to the characteristic. Furthermore, it is preferable that the characteristic is an illuminance of the light.

With the arrangement, the electronic device of the present invention further includes the retaining means for retaining the plurality of adjustment values which are different from each other, and the color saturation adjusting means adjusts the color saturation by use of one of the plurality of adjustment values retained by the retaining means, which one of the plurality of adjustment values corresponds to the characteristic thus detected.

For example, in a case where an irradiation intensity of external light is high, an image displayed on the electronic device might be significantly deteriorated in color saturation, and might become a faded image having low visual quality. In this case, it might be difficult to cause the image thus displayed to have a desired color saturation by merely emphasizing the color saturation.

In view of this, the color saturation adjusting means (i) selects one of the plurality of adjustment values retained by the retaining means, which one of the plurality of adjustment values corresponds to the characteristic detected by the characteristic detecting means (that is, an adjustment value corresponding to an irradiation amount of external light), and (ii) adjusts display information so that the color saturation is further emphasized. With the arrangement, it is possible to cause the image thus displayed to have a desired color saturation

Moreover, the electronic device of the present invention is preferably arranged such that (i) the color saturation adjusting means adjusts the color saturation in such a manner that a value indicating a degree of emphasis of the color saturation is adjusted to be higher as the illuminance thus detected becomes higher, and (ii) the color saturation adjusting means adjusts the color saturation in such a manner that a value indicating a degree of emphasis of the color saturation is adjusted to be lower as the illuminance thus detected becomes lower.

With the arrangement, the color saturation adjusting means (i) adjusts the value indicating the degree of emphasis of the color saturation to be higher as the illuminance thus detected becomes higher, and (ii) adjusts the value indicating the degree of emphasis of the color saturation to be lower as the illuminance thus detected becomes lower. That is, in a case where the irradiation amount of external light is large, the color saturation adjusting means adjusts the value indicating the degree of emphasis of the color saturation to be high. On the other hand, in a case where the irradiation amount of external light is small, the color saturation adjusting means adjusts the value indicating the degree of emphasis of the color saturation to be low. This makes it possible to display an image having further higher visual quality.

As described above, a plurality of adjustment values, corresponding to respective values indicating, in stages, degrees of emphasis of the color saturation, are retained, and the color saturation is adjusted by use of one of the plurality of adjustment values, which one of the plurality of adjustment values corresponds to the optical characteristic detected by the optical sensor. With the arrangement, it becomes possible to carry out, in accordance with a situation in which the electronic device is used, optimum adjustment with respect to the image displayed on the electronic device.

Further, the electronic device of the present invention is preferably such that the characteristic is a spectral property of the light. Furthermore, the electronic device of the present invention preferably further includes hue selecting means for selecting, on the basis of the spectral property thus detected, at least one of a plurality of hues which are different from each other, as a target of adjustment of the color saturation, the color saturation adjusting means adjusting the color saturation of the at least one of the plurality of hues thus selected.

With the arrangement, the characteristic detected in the electronic device is a spectral characteristic, and the electronic device further includes the hue selecting means for selecting, on the basis of the spectral property thus detected, at least one of a plurality of hues which are different from each other, as a target of adjustment of the color saturation.

For example, there is a case where external light having a lot of a red component (such as sunrise glow and sunset glow) is incident on the electronic device. In this case, as compared with a case where external light is incident on the electronic device during the daytime, the image displayed on the electronic device is reduced in color saturation and becomes reddish. In this case, the color saturation adjusting means adjusts the color saturation so that a color saturation of the red component is reduced or color saturations of color components other than the red component are increased. With the arrangement, it is possible to (i) realize an appropriate balance in color through an entire display region, and therefore (ii) display a desirable image.

Moreover, the electronic device of the present invention is preferably arranged such that the hue selecting means selects the at least one of the plurality of hues, which is not a hue(s) larger in amount than a predetermined reference amount, the color saturation adjusting means adjusting the color saturation of the at least one of the plurality of hues thus selected in such a manner that the color saturation adjusting means adjusts a value of the color saturation of the at least one of the plurality of hues thus selected to be higher.

With the arrangement, it is possible to (i) adjust the display information to have a desirable color saturation in accordance with a spectral characteristic of external light, and therefore (ii) improve display quality.

Further, the electronic device of the present invention is preferably arranged such that the hue selecting means selects the at least one of the plurality of hues, which is a hue(s) larger in amount than a predetermined reference amount, the color saturation adjusting means adjusting a value of a color saturation of the at least one of the plurality of hues thus selected to be lower.

With the arrangement, it is possible to (i) adjust the display information to have a desirable color saturation in accordance with a spectral characteristic of external light, and therefore (ii) improve display quality.

Furthermore, the electronic device of the present invention is preferably arranged such that the hue larger in amount than the predetermined reference amount is at least one of a red hue, a blue hue, a green hue, a yellow hue, a light blue hue, and a purple hue.

Moreover, the electronic device of the present invention is preferably arranged such that the color saturation adjusting means adjusts, in accordance with the characteristic detected in a certain frame, the color saturation within a frame following the certain frame.

Further, the electronic device of the present invention is preferably arranged such that the characteristic detecting means outputs the characteristic thus detected to the color saturation adjusting section only once in 1 frame.

With the arrangement, the electronic device of the present invention is such that the color saturation adjusting means adjusts, in accordance with the characteristic detected in the certain frame, the color saturation in the frame following the certain frame. That is, the color saturation adjusting means adjusts the color saturation per frame.

For example, in a case where (i) the characteristic detecting means detects, on the basis of the output t received from the optical sensor, an illuminance in the middle of 1 frame, and (ii) the color saturation adjusting means adjusts the color saturation in accordance with a result of the detection, the image might be displayed on the electronic device such that a region in which the adjustment of the color saturation has not been reflected and another region in which the adjustment of the color saturation has been reflected are displayed separately and differently, That is, in a case where the color saturation is adjusted at timing in the middle of 1 frame, an upper part of the image and a lower part of the image might have different color saturations, and this might cause generation of flickers in the display screen.

In view of this, the color saturation adjusting means adjusts the color saturation in the frame following the frame in which the characteristic detecting means has detected the optical characteristic. With the arrangement, it is possible to display such an image that all the display regions of the display screen are adjusted in color saturation uniformly.

Further, the characteristic detecting means supplies the characteristic thus detected to the color saturation adjusting means only once in 1 frame. With the arrangement, it is possible to prevent generation of flickers in the display screen.

Moreover, the electronic device of the present invention is preferably arranged such that the color saturation adjusting means adjusts the color saturation in stages during a plurality of continuous frames.

For example, in a case where (i) the characteristic detecting means detects, in the middle of a certain frame, a change in the optical characteristic outputted from the optical sensor, and (ii) the color saturation is adjusted to a final target color saturation at once directly in a frame following the certain frame, there might be a significant change in visual quality instantly when the certain frame is switched to the next frame. As a result, such a significant change might be perceived by human's eyes as generation of flickers in the display screen.

In view of this, information on a change in the optical characteristic outputted from the optical sensor is detected, and then, a value of the color saturation is adjusted in stages during a plurality of frames. With the arrangement, it is possible to display an image while suppressing the generation of flickers.

Further, the electronic device of the present invention is preferably arranged such that the color saturation adjusting means adjusts the color saturation in such a manner that the number of a plurality of continuous frames during which the color saturation is adjusted to be higher in stages and the number of a plurality of continuous frames during which the color saturation is adjusted to be lower in stages are different from each other.

According to the arrangement, it is possible to adjust the color saturation in such a manner that a speed at which the color saturation is emphasized and a speed at which the color saturation is weakened are different from each other. It is therefore possible to prevent human's eyes from perceiving generation of flickers in the display screen.

Furthermore, the electronic device of the present invention preferably further includes a temperature sensor; and temperature detecting means for detecting a temperature of a surface of the display section on the basis of an output of the temperature sensor, the color saturation adjusting means adjusting the color saturation during a plurality of continuous frames the number of which is set for each temperature of the surface thus detected.

According to the arrangement, the electronic device of the present invention adjusts the color saturation in stages during a plurality of continuous frames in accordance with a temperature of the surface of the display section. That is, the number of frames, during which the color saturation is adjusted in stages while the surface of the display section has a high temperature, and the number of frames, during which the color saturation is adjusted in stages while the surface of the display section has a low temperature, are different from each other.

For example, in a case where a liquid crystal panel is used as the display section, a response characteristic is changed depending on a change in temperature. That is, in a case where a surface of the liquid crystal panel has a high temperature, the response characteristic becomes quick. On the other hand, in a case where the surface of the liquid crystal panel has a low temperature, the response characteristic becomes slow. In view of this, the electronic device includes the temperature sensor. With the arrangement, it is possible to change a transition time period for adjusting the color saturation, in accordance with an ambient temperature. It is therefore possible to cause even a liquid crystal panel to display an image having a desirable color saturation.

Moreover, the electronic device of the present invention is preferably arranged such that the color saturation adjusting means adjusts the color saturation in such a manner that the color saturation is adjusted during a larger number of continuous frames as the temperature of the surface thus detected becomes lower.

Further, the electronic device of the present invention is preferably arranged such that the color saturation adjusting means adjusts the color saturation in such a manner that the color saturation is adjusted during a smaller number of continuous frames as the temperature of the surface thus detected becomes higher.

With the arrangement, the electronic device has a long transition time period in a case where the surface of the display section has a high temperature, whereas the electronic device has a short transition time period in a case where the surface of the display section has a low temperature. That is, in the case of a high temperature, the number of frames during which the color saturation is adjusted in stages is increased, whereas, in the case of a low temperature, the number of frames during which the color saturation is adjusted in stages is reduced, for example.

With the arrangement, even in a case where a liquid crystal panel is used as the display section, it is possible to adjust the color saturation in accordance with a response characteristic of the liquid crystal panel.

Furthermore, the electronic device of the present invention is preferably arranged such that the color saturation adjusting means does not adjust the color saturation in a case where the output of the at least one optical sensor is changed and then is changed back, within a predetermined reference time period, into a state before the output is changed.

For example, there is a case where (i) an irradiation condition of external light in the first frame of the plurality of continuous frames is changed, and (ii) the irradiation condition is further changed, in the next frame, back to the irradiation condition of the first frame. In this case, if the color saturation is adjusted in accordance with such a change in the irradiation condition, there might be generation of flickers in the display screen.

In view of this, in a case where (i) the irradiation condition is changed in the first frame, (ii) the irradiation condition is further changed, within a predetermined reference time period, back to the state before the irradiation condition was changed (i.e., the irradiation condition of the first frame), the color saturation adjusting means does not adjust the color saturation, and keeps the same adjustment condition during time periods of such frames. With the arrangement, it is possible to (i) suppress generation o flickers and (ii) display an image in such a manner that the color saturation is changed naturally.

Further, the electronic device of the present invention is preferably arranged such that the predetermined reference time period is 1 frame. With the arrangement, it is possible to display an image in a further desirable condition.

Furthermore, the electronic device of the present invention is preferably arranged such that the display region is a part of a display screen of the display section.

Moreover, it is preferable that the display screen includes a plurality of display regions, the characteristic detecting means detects, for each of the plurality of display regions, in accordance with the output of the at least one optical sensor corresponding to the display region, the characteristic of the display region; and the color saturation adjusting means adjusts, for each of the plurality of display regions, the color saturation in accordance with the characteristic of the display region.

With the arrangement, the color saturation is not adjusted uniformly through an entire display screen in the same manner, but an optimum amount of adjustment of the color saturation is set for each of the plurality of irradiated regions. It is therefore possible to further prevent deterioration of display quality.

Further, the electronic device of the present invention is preferably arranged such that, in a case where a value of a characteristic of one of the plurality of display regions is different from that of a characteristic of an adjacent one of the plurality of display regions, the color saturation adjusting means adjusts a color saturation in the vicinity of a border between the one of the plurality of display regions and the adjacent one of the plurality of display regions by use of an intermediate value between an adjustment value of a color saturation, corresponding to the characteristic of the one of the plurality of display regions, and an adjustment value of a color saturation, corresponding to an illuminance of light incident on the adjacent one of the display regions.

For example, there is a case where (i) first external light is incident on a region, (ii) second external light having an intensity different from that of the first external light is incident on another region, and (iii) the region and the another region are adjacent to each other. In this case, if the color saturation is adjusted per display region, there is a significant difference in color saturation in a region in the vicinity of a border between the region and the another region. This might cause generation of flickers. In view of this, the color saturation in the region in the vicinity of the border is adjusted by use of an intermediate value between an adjustment value used to adjust the color saturation in the region and another adjustment value used to adjust the color saturation in the another region. With the arrangement, it is possible to (i) reduce the significant difference in color saturation in the vicinity of the border, and therefore (ii) adjust each of the regions in color saturation without reducing visual quality of an entire display screen.

Furthermore, the electronic device of the present invention is preferably arranged such that the at least one optical sensor includes a plurality of optical sensors which are provided in respective positions different from each other.

With the arrangement, it is possible to detect details of an irradiation condition in a display region (e.g., light distribution) more precisely.

Moreover, the electronic device of the present invention is preferably arranged such that the plurality of optical sensors are provided in pixels of the display section.

With the arrangement, the plurality of optical sensors are provided in the pixels of the display screen of the display section. By arranging the plurality of optical sensors in the pixels, it is possible to detect easily (i) which part in the display region external light is incident on and (ii) what characteristic the external light incident on the part has.

Further, the electronic device of the present invention is preferably arranged such that the plurality of optical sensors are provided in a frame region of the display section outside the display screen of the display section.

With the arrangement, the plurality of optical sensors are provided in different positions in the frame region of the display section. It is therefore possible to detect details of the irradiation condition (e.g., light distribution) in the display region more precisely.

Furthermore, the electronic device of the present invention is preferably arranged such that the display panel is a liquid crystal panel.

With the arrangement, it is possible to carry out desirable adjustment of the color saturation in accordance with a response characteristic of a liquid crystal panel.

Moreover, the electronic device of the present invention preferably further includes: setting switching means for carrying out switching between (i) a setting which allows adjustment of the color saturation irrespective of the characteristic, (ii) a setting which disallows the adjustment of the color saturation irrespective of the characteristic, and (iii) a setting which allows the adjustment of the color saturation depending on the characteristic.

Note that the electronic device of the present invention can be realized by a computer. In this case, the scope of the present invention encompass: a program for realizing the electronic device by use of a computer, the program causing a computer to function as each means described above; and a computer-readable recording medium in which the program is stored.

### Industrial Applicability

The present invention is applicable to an electronic device such as a mobile information terminal, a mobile phone, a digital still camera, a digital video camera, a personal computer, and a television.

### Reference Signs List

1: Electronic device
2: Display section
3: Optical characteristic detection section (characteristic detecting means)
4: Color saturation adjustment section (color saturation adjusting means)
5: Optical sensor
6: Adjustment value retention section (retaining means)
7: Hue selection section (hue selecting means)
8: Timing controller

## Claims

1. An electronic device comprising:
at least one optical sensor;
a display section;
characteristic detecting means for detecting, on the basis of an output of the at least one optical sensor, a characteristic of light incident on a display region which corresponds to the at least one optical sensor; and
color saturation adjusting means for adjusting, on the basis of the characteristic thus detected, a color saturation of display information which is to be displayed on the display region.

2. The electronic device as set forth in claim 1, further comprising:
retaining means for retaining a plurality of adjustment values which are different from each other, the color saturation being adjusted by use of one of the plurality of adjustment values,
the color saturation adjusting means adjusting the color saturation by use of the one of the plurality of adjustment values, which one of the plurality of adjustment values corresponds to the characteristic.

3. The electronic device as set forth in claim 1 or 2, wherein:
the characteristic is an illuminance of the light.

4. The electronic device as set forth in claim 3, wherein:
the color saturation adjusting means adjusts the color saturation in such a manner that a value indicating a degree of emphasis of the color saturation is adjusted to be higher as the illuminance thus detected becomes higher.

5. The electronic device as set forth in claim 3, wherein:
the color saturation adjusting means adjusts the color saturation in such a manner that a value indicating a degree of emphasis of the color saturation is adjusted to be lower as the illuminance thus detected becomes lower.

6. The electronic device as set forth in claim 1 or 2, wherein:
the characteristic is a spectral property of the light.

7. The electronic device as set forth in claim 6, further comprising:
hue selecting means for selecting, on the basis of the spectral property thus detected, at least one of a plurality of hues which are different from each other, as a target of adjustment of the color saturation,
the color saturation adjusting means adjusting the color saturation of the at least one of the plurality of hues thus selected.

8. The electronic device as set forth in claim 7, wherein:
the hue selecting means selects the at least one of the plurality of hues, which is not a hue(s) larger in amount than a predetermined reference amount,
the color saturation adjusting means adjusting the color saturation of the at least one of the plurality of hues thus selected.

9. The electronic device as set forth in claim 8, wherein:
the color saturation adjusting means adjusts a value of the color saturation of the at least one of the plurality of hues thus selected to be higher.

10. The electronic device as set forth in claim 7, wherein:
the hue selecting means selects the at least one of the plurality of hues, which is a hue(s) larger in amount than a predetermined reference amount,
the color saturation adjusting means adjusting a value of a color saturation of the at least one of the plurality of hues thus selected to be lower

11. The electronic device as set forth in any one of claims 8 through 10, wherein:
the hue larger in amount than the predetermined reference amount is at least one of a red hue, a blue hue, a green hue, a yellow hue, a light blue hue, and a purple hue.

12. The electronic device as set forth in any one of claims 1 through 11, wherein:
the color saturation adjusting means adjusts, in accordance with the characteristic detected in a certain frame, the color saturation within a frame following the certain frame.

13. The electronic device as set forth in any one of claims 1 through 12, wherein:
the color saturation adjusting means adjusts the color saturation in stages during a plurality of continuous frames.

14. The electronic device as set forth in claim 13, wherein:
the color saturation adjusting means adjusts the color saturation in such a manner that the number of a plurality of continuous frames during which the color saturation is adjusted to be higher in stages and the number of a plurality of continuous frames during which the color saturation is adjusted to be lower in stages are different from each other

15. The electronic device as set forth in claim 13 or 14, further comprising:
a temperature sensor; and
temperature detecting means for detecting a temperature of a surface of the display section on the basis of an output of the temperature sensor,
the color saturation adjusting means adjusting the color saturation during a plurality of continuous frames the number of which is set for each temperature of the surface thus detected.

16. The electronic device as set forth in claim 15, wherein:
the color saturation adjusting means adjusts the color saturation in such a manner that the color saturation is adjusted during a larger number of continuous frames as the temperature of the surface thus detected becomes lower.

17. The electronic device as set forth in claim 15, wherein:
the color saturation adjusting means adjusts the color saturation in such a manner that the color saturation is adjusted during a smaller number of continuous frames as the temperature of the surface thus detected becomes higher.

18. The electronic device as set forth in any one of claims 1 through 11, wherein:
the color saturation adjusting means does not adjust the color saturation in a case where the output of the at least one optical sensor is changed and then is changed back, within a predetermined reference time period, into a state before the output is changed.

19. The electronic device as set forth in claim 18, wherein:
the predetermined reference time period is 1 frame.

20. The electronic device as set forth in any one of claims 1 through 19, wherein:
the display region is a part of a display screen of the display section.

21. The electronic device as set forth in claim 20, wherein:
the display screen includes a plurality of display regions;
the characteristic detecting means detects, for each of the plurality of display regions, in accordance with the output of the at least one optical sensor corresponding to the display region, the characteristic of the display region; and
the color saturation adjusting means adjusts, for each of the plurality of display regions, the color saturation in accordance with the characteristic of the display region.

22. The electronic device as set forth in claim 20, wherein:
in a case where a value of a characteristic of one of the plurality of display regions is different from that of a characteristic of an adjacent one of the plurality of display regions, the color saturation adjusting means adjusts a color saturation in the vicinity of a border between the one of the plurality of display regions and the adjacent one of the plurality of display regions by use of an intermediate value between an adjustment value of a color saturation, corresponding to the characteristic of the one of the plurality of display regions, and an adjustment value of a color saturation, corresponding to an illuminance of light incident on the adjacent one of the display regions.

23. The electronic device as set forth in any one of claims 1 through 22, wherein:
the at least one optical sensor includes a plurality of optical sensors which are provided in respective positions different from each other.

24. The electronic device as set forth in claim 23, wherein:
the plurality of optical sensors are provided in pixels of the display section.

25. The electronic device as set forth in claim 23, wherein:
the plurality of optical sensors are provided in a frame region of the display section outside the display screen of the display section

26. The electronic device as set forth in any one of claims 1 through 25, wherein:
the characteristic detecting means outputs the characteristic thus detected to the color saturation adjusting section only once per frame.

27. The electronic device as set forth in any one of claims 1 through 26, wherein:
the display section is a liquid crystal panel.

28. The electronic device as set forth in any one of claims 1 through 27, further comprising:
setting switching means for carrying out switching between (i) a setting which allows adjustment of the color saturation irrespective of the characteristic, (ii) a setting which disallows the adjustment of the color saturation irrespective of the characteristic, and (iii) a setting which allows the adjustment of the color saturation depending on the characteristic.

29. A method of adjusting a color saturation of an electronic device including an optical sensor and a display section, the method comprising the steps of:
detecting, on the basis of an output of the optical sensor, a characteristic of light incident on a display region which corresponds to the optical sensor; and
adjusting, on the basis of the characteristic thus detected, a color saturation of the display region.

30. A program for causing an electronic device recited in any one of claims 1 through 28 to operate,
the program causing a computer to function as each of said means.

31. A computer-readable recording medium in which a program recited in claim 30 is recorded.
